# EUROPEAN PATENT APPLICATION

(11) **EP 4 834 743 A1**
(43) Date of publication of application: **04.11.2026**
(21) Application number: 25173991.8
(22) Date of filing: 02.05.2025
(51) Int. Cl.: B62M 3/08

(54) **BICYCLE PEDAL**

(71) Applicant: VP Components Co., Ltd., Taichung City 438 (TW)
(72) Inventor: LIN, Wen-Hwa, Taichung City (TW)
(74) Representative: Viering, Jentschura & Partner mbB Patent- und Rechtsanwälte

(57) **Abstract**

A bicycle pedal includes a pedal body (10) formed of a metal material, the pedal body (10) having two pedal parts (12) disposed in opposite to each other, each of the two pedal parts (12) having an engagement bore (124) passing therethrough; and two anti-slip members (20) detachably disposed on the two pedal parts (12) of the pedal body (10), respectively, each of the anti-slip members (20) having an anti-slip surface (21) and a combination surface (22) in opposite to the anti-slip surface (21), the combination surface (22) having an engaging part (23) protruding thereon, each of the anti-slip members (20) engaged with the engagement bore (124) of the corresponding pedal part (12) through the engaging part (23) of the corresponding combination surface (22). The detachable anti-slip members (20) are quickly assembled onto the pedal body (10), facilitating the convenience of assembly and detachment, allowing the user to conveniently replace or repair the components according to personal usage preferences, and increasing the service life of the pedal.

## Description

### BACKGROUND OF THE DISCLOSURE

### 1. Field of the Disclosure:

The present disclosure relates to bicycles, and more particularly, to a bicycle pedal for quick assembly of an anti-slip member.

### 2. Description of the Related Art:

Regarding conventional bicycle pedal manufacturing method, plastic or metal material is injection molded to form the pedal body. Afterward, an anti-slip strip is manually attached to the surface of the pedal body. Such manufacturing step not only consumes a significant amount of time but also increases labor costs, affecting overall production efficiency.

Moreover, the manual attachment process of anti-slip strip may lead to issues such as misalignment or poor adhesion, causing the difficulty of ensuring the attachment precision, consistency among finished pedals, and overall durability thereof. Also, if the adhesive is unevenly applied, it may cause partial lifting or detachment of the anti-slip strip, reducing the anti-slip effect and potentially compromising riding safety.

Furthermore, after a period of use, the anti-slip effect of conventional anti-slip strip diminishes due to surface wearing. Since such adhesive-type strip would not be replaced easily, the user must either replace the entire pedal or carry out a time-consuming removing and reapplying operation of the strip, not only causing inconvenience, but also increasing maintenance cost.

On the other hand, due to a relatively large volume of plastic products in various industries in modern society, the recycling and sorting tasks of discarded plastics have become an important issue. During the recycling of pedals, the conventional adhesive anti-slip strips cause additional challenges. As the pedal body and the anti-slip strips are made of different materials, the strips and residual adhesive have to be removed from the pedal body in advance to enable complete recycling. Such process is not only time-consuming and labor-intensive, but also increases the cost of recycling.

Also, recycling companies are normally not pedal manufacturers, so that it is difficult for recycling companies to immediately identify differences in material composition between the pedal and the anti-slip strip, which may negatively affect the efficiency and accuracy of recycling classification. If pedals enter the recycling process without proper pretreatment, quality of the recycled plastic may be compromised, which potentially results in contamination of the entire batch of recycled material and makes it unusable, not only leading to resource waste, but also imposing additional burden on the overall recycling system.

### SUMMARY OF THE DISCLOSURE

To improve the issues above, the present disclosure provides a bicycle pedal provided with a detachable anti-slip member which is able to be quickly assembled onto the pedal body, thereby enhancing assembly efficiency during manufacturing and facilitating disassembly during recycling process, also allowing the user to conveniently replace or repair the anti-slip member according to personal usage preferences, effectively prolonging the service life of the pedal.

For achieving the aforementioned objectives, a bicycle pedal in accordance with an embodiment of the present disclosure comprises:
a pedal body formed of a metal material, the pedal body having a shaft bore transversely passing through the pedal body and two pedal parts disposed in opposite to each other, each of the two pedal parts having an engagement bore passing therethrough; and
two anti-slip members detachably disposed on the two pedal parts of the pedal body, respectively, each of the anti-slip members having an anti-slip surface and a combination surface in opposite to the anti-slip surface, the combination surface having an engaging part protruding thereon, each of the anti-slip members engaged with the engagement bore of the corresponding pedal part through the engaging part of the corresponding combination surface.

With such configuration, the anti-slip member of the present disclosure is embodied as a detachable structure, which is quickly assembled onto the pedal body, facilitating the assembly process during manufacturing operation and the removing process during the recycling operation. Also, the present disclosure allows the user to conveniently carry out replacement or repairing task according to personal usage preferences, effectively prolonging the service life of the pedal. Therefore, the present disclosure improves issues related to conventional adhesive-type anti-slip strips.

Also, the anti-slip member of the present disclosure is combined with the pedal body in an engagement manner, achieving a quick assembly without the need of additional assembling tools and facilitating the convenience of detachment.

Also, the anti-slip member of the present disclosure is disposed in an accommodating recess and combined with the pedal body through a multi-point engagement mechanism, ensuring secure engagement between the anti-slip member and the pedal body, and preventing the anti-slip member from accidental detachment. Further, the arrangement of the engagement bores and the engaging parts ensures that the combination between the components bears force evenly, effectively extending the service life of the pedal body.

Also, an anti-slip pattern of the anti-slip member in the present disclosure is formed by laser etching during the manufacturing process, effectively simplifying the manufacturing steps, reducing the processing time, and effectively lowering manufacturing costs while improving the anti-slip effect.

Also, the pedal body of the present disclosure comprises two support ribs, enhancing the rigidity of the pedal. The shaft bore is disposed between the two support ribs, thereby ensuring stable installation of the pedal body and effectively reducing the risk of deformation or damage.

### BRIEF DESCRIPTION OF THE DRAWINGS

**Fig. 1** is a perspective view of the bicycle pedal in accordance with an embodiment of the present disclosure.
**Fig. 2** is an exploded view of the bicycle pedal in accordance with an embodiment of the present disclosure.
**Fig. 3** is a front view of the bicycle pedal in accordance with an embodiment of the present disclosure.
**Fig. 4** is a side view of the bicycle pedal in accordance with an embodiment of the present disclosure.
**Fig. 5** is a sectional view of the bicycle pedal, illustrating the two anti-slip members assembled onto the pedal body.
**Fig. 6** is another sectional view of the bicycle pedal, illustrating the engaging parts of the two anti-slip members arranged in positional alignment with the engagement bores of the pedal body.
**Fig. 7** is another sectional view of the bicycle pedal, illustrating the engaging parts of the two anti-slip members engaged with the engagement bores of the pedal body.

### DETAILED DESCRIPTION OF THE DISCLOSURE

The aforementioned and further advantages and features of the present disclosure will be understood by reference to the description of the preferred embodiment in conjunction with the accompanying drawings where the components are illustrated based on a proportion for explanation but not subject to the actual component proportion.

The directional terms of, for example, "up", "down", "front", "rear", "left", "right", "inner", "outer", and "side" are only used herein for illustrating the relative directions shown in the drawings. Therefore, the directional terms are applied for the purpose of illustration and understanding of the present disclosure, instead of limiting the present disclosure.

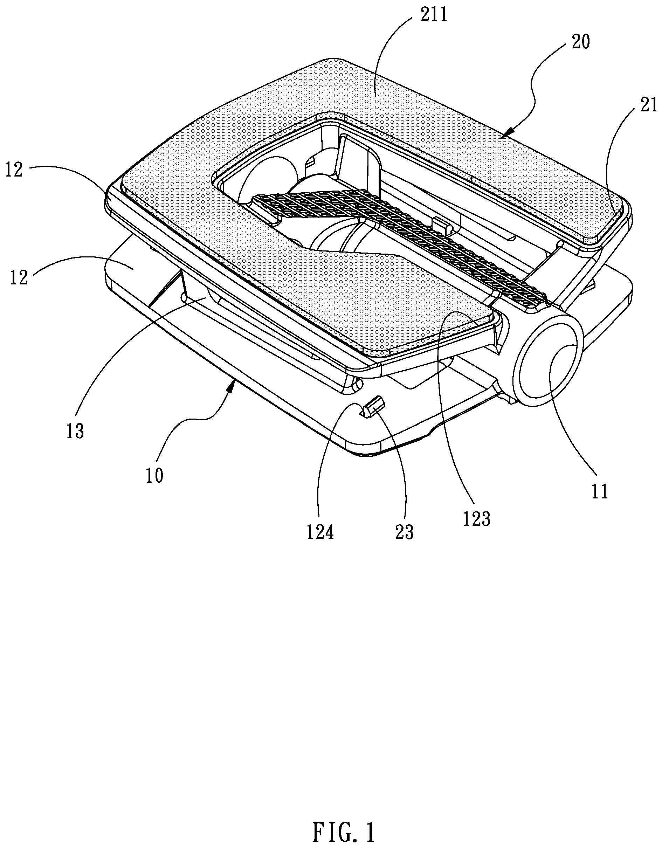

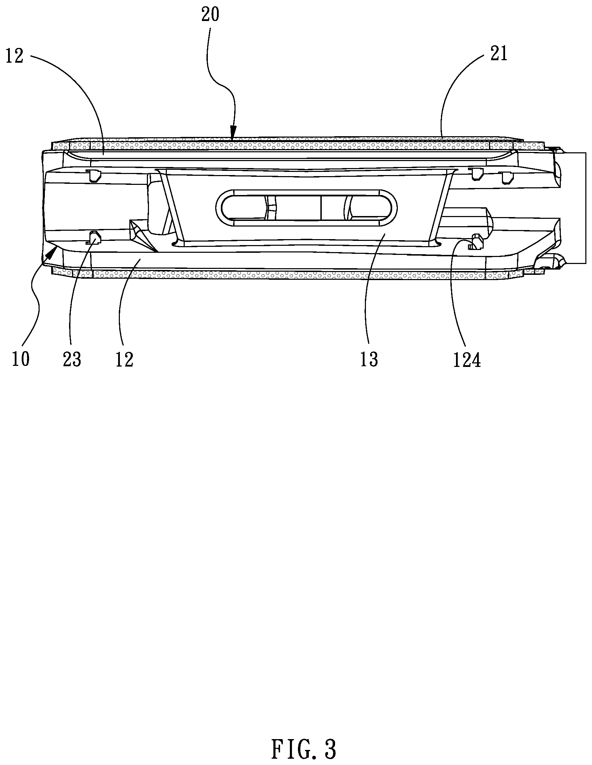

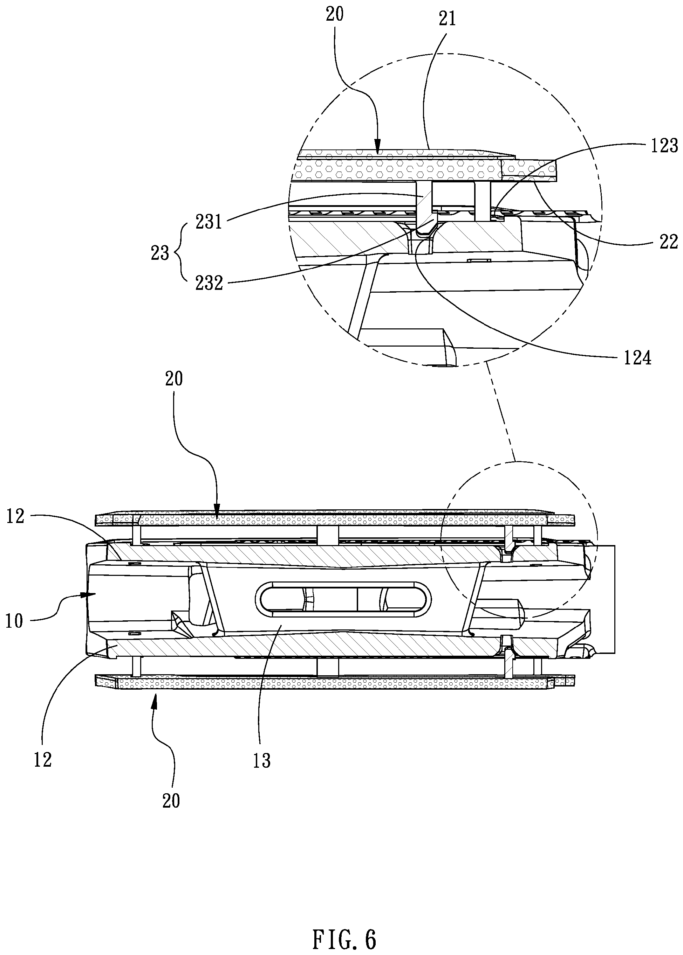

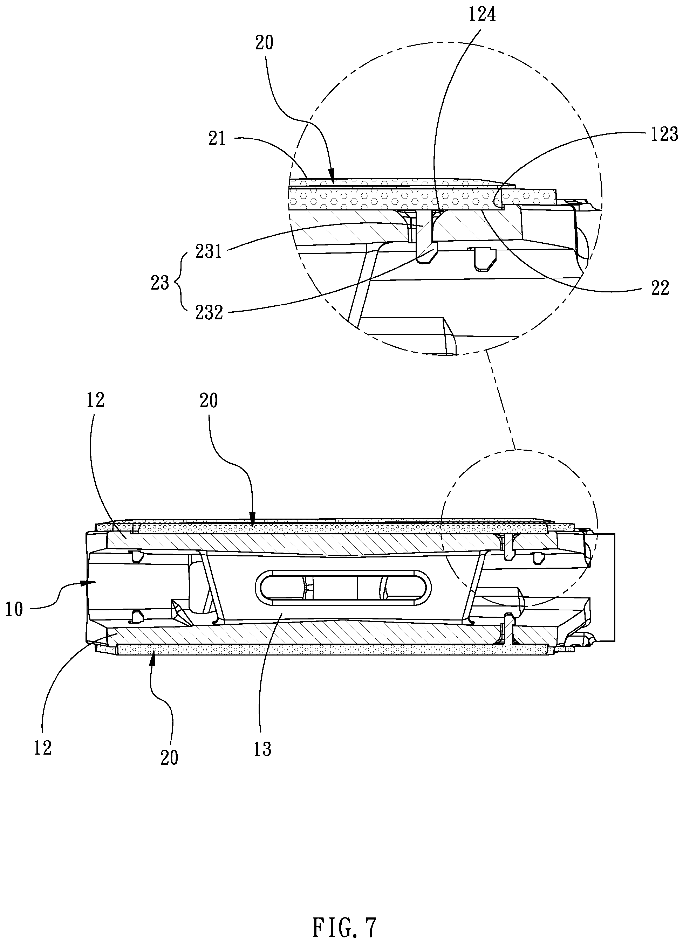

Referring to **Fig. 1** to **Fig. 7****,** the present disclosure provides a bicycle pedal, comprising a pedal body **10** and two anti-slip members **20.**

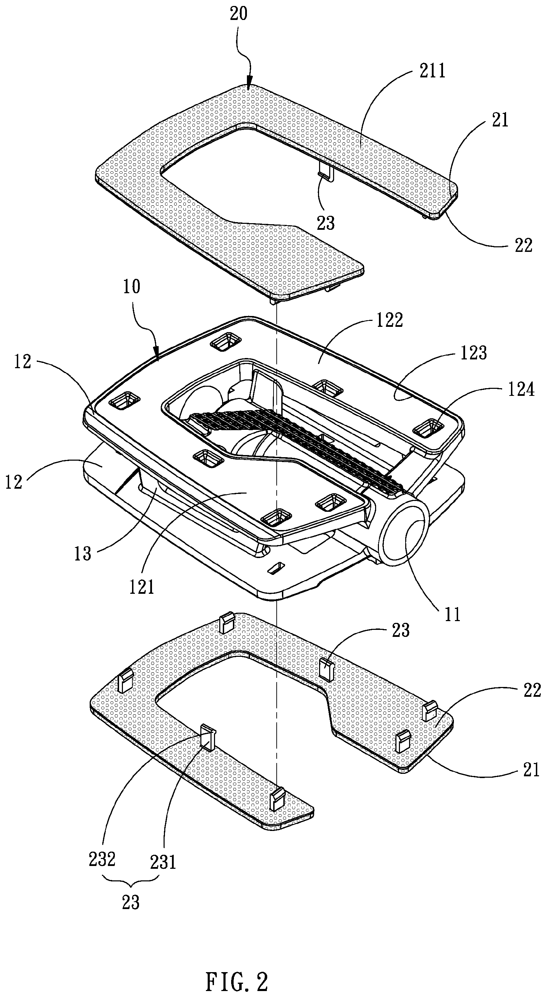

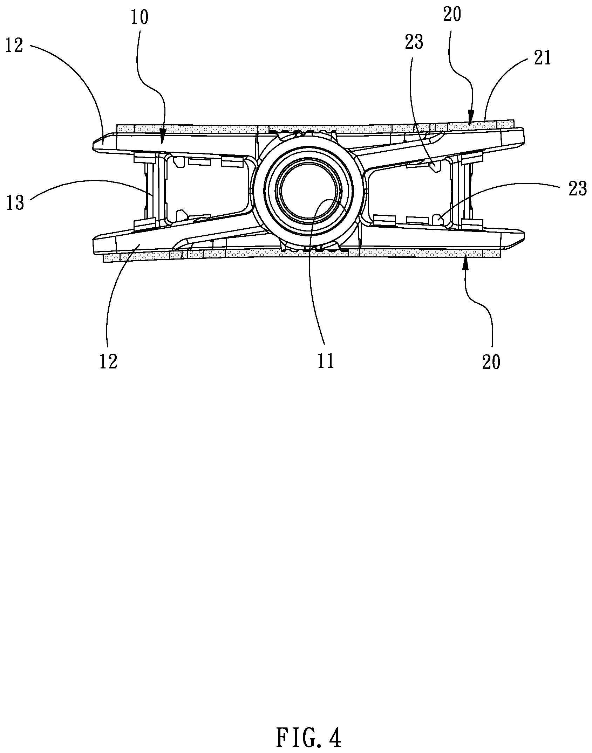

The pedal body **10** is formed of a metal material, and has a shaft bore **11** transversely passing through the pedal body **10.** The shaft bore **11** is mounted around a shaft for combining the crank of a bicycle. The pedal body **10** has two pedal parts **12** disposed in opposite to each other, with two support ribs **13** integrally connected between the two pedal parts **12,** and the shaft bore **11** arranged between the two support ribs **13,** as shown by **Fig. 4****.** Therein, each pedal part **12** has a first step area **121** and a second step area **122,** wherein the area of the first step area **121** is larger than the area of the second step area **122,** as shown by **Fig. 2****.**

Also, each pedal part **12** has a concave accommodating recess **123,** which is formed in a shape identical to the shape of the pedal body **10,** as shown by **Fig. 1** and **Fig. 2****.** Therein, the accommodating recess **123** has an engagement bore **124** passing therethrough. In the embodiment, a plurality of engagement bores **124** are included. The engagement bores **124** are disposed at intervals along the periphery of the pedal body **10** and the shaft bore **11.** Therein, the number of the engagement bores **124** of the first step area **121** is greater than the number of the engagement bores **124** of the second step area **122,** as shown by **Fig. 2****.**

The two anti-slip members **20** are detachably disposed in the accommodating recesses **123** of the two pedal parts **12** of the pedal body **10.** Therein, the shape of the two anti-slip members **20** are identical to the shape of the two pedal parts **12.** Each anti-slip member **20** has an anti-slip surface **21** and a combination surface **22** disposed in opposite to the anti-slip surface **21.** The anti-slip surfaces **21** of the two anti-slip members **20** protrude from the accommodating recesses **123** of the two pedal parts **12,** as shown by **Fig. 1****,** **Fig. 3****,** and **Fig. 4****.**

Further, the combination surface **22** has a protruding engaging part **23,** and each anti-slip member **20** is engaged with the engagement bore **124** of each pedal part **12** through the engaging part **23** of the combination surface **22.** Therein, the engaging part **23** has an extension section **231** and an engaging section **232.** The extension section **231** perpendicularly extends outward from the combination surface **22.** The engaging section **232** is bent with respect to the extension section **231.** The engaging section **232** is allowed to be engaged with the engagement bore **124.** In the embodiment, a plurality of engaging parts **23** are included, and the number of the engagement bores **124** matches with the number of the engaging parts **23.**

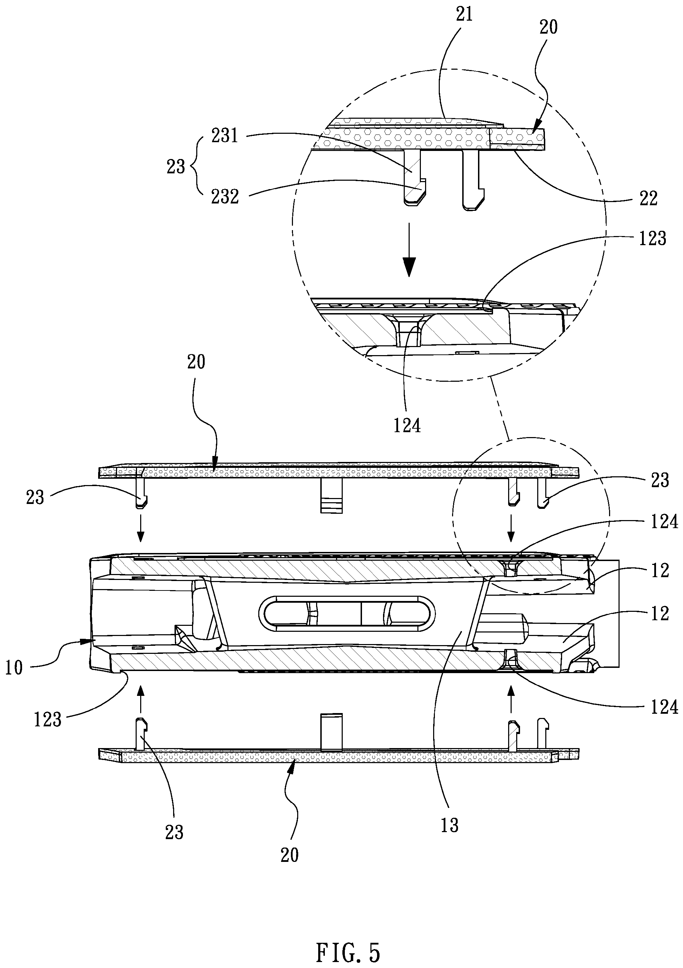

Referring to **Fig. 5** to **Fig. 7****,** when the anti-slip member **20** is assembled onto the pedal body **10,** each of the engaging parts **23** are aligned with each of the corresponding engagement bores **124,** and the engaging section **232** of each engaging part **23** is inserted along the corresponding engagement bore **124** until the engaging section **232** of each engaging part **23** passes completely through the engagement bore **124,** with the extension section **231** of each engaging part **23** passing through the corresponding engagement bore **124,** whereby the anti-slip member **20** is embedded in the accommodating recess **123** of the pedal part **12.**

The anti-slip surface **21** of each anti-slip member **20** has an anti-slip pattern **211.** The anti-slip pattern **211** is formed by laser etching during the manufacturing process. In the embodiment, when the anti-slip member **20** is injection molded, the anti-slip pattern **211** is able to be simultaneously formed by laser etching.

Notably, in other possible embodiments of the present disclosure, the anti-slip member **20** is allowed to be integrally formed with the pedal body **10.**

With the foregoing configuration, advantages of the present disclosure will be illustrated below.

The anti-slip member **20** of the present disclosure is a detachable structure, which is allowed to be quickly assembled onto the pedal body **10,** facilitating the assembly convenience during manufacturing, and allowing the user to conveniently carry out replacement or repairing task according to personal usage preferences, effectively prolonging the service life of the pedal.

The anti-slip member **20** of the present disclosure is combined with the pedal body **10** in an engagement manner, achieving a quick assembly without the need of additional assembling tools and facilitating the convenience of detachment.

The anti-slip member **20** of the present disclosure is disposed in the accommodating recess **123** and combined with the pedal body 10 through a multi-point engagement mechanism, ensuring secure engagement between the anti-slip member **20** and the pedal body **10,** and preventing the anti-slip member **20** from accidental detachment.

The arrangement of the engagement bores **124** and the engaging parts **23** ensures that the combination between the components bears force evenly, effectively extending the service life of the pedal body **10.**

The anti-slip pattern **211** of the anti-slip member **20** in the present disclosure is formed by laser etching during the manufacturing process, effectively simplifying the manufacturing steps, reducing the processing time, and effectively lowering manufacturing costs while improving the anti-slip effect.

The pedal body **10** of the present disclosure comprises the two support ribs **13,** enhancing the rigidity of the pedal. The shaft bore **11** is disposed between the two support ribs **13,** thereby ensuring stable installation of the pedal body **10** and effectively reducing the risk of deformation or damage.

Although particular embodiments of the disclosure have been described in detail for purposes of illustration, various modifications and enhancements may be made without departing from the scope of the disclosure. Accordingly, the disclosure is not to be limited except as by the appended claims.

## Claims

1. A bicycle pedal, **characterized in**:
a pedal body (10) formed of a metal material, the pedal body (10) having a shaft bore (11) transversely passing through the pedal body (10) and two pedal parts (12) disposed in opposite to each other, each of the two pedal parts (12) having an engagement bore (124) passing therethrough, respectively; and
two anti-slip members (20) detachably disposed on the two pedal parts (12) of the pedal body (10), respectively, each of the anti-slip members (20) having an anti-slip surface (21) and a combination surface (22) in opposite to the anti-slip surface (21), the combination surface (22) having an engaging part (23) protruding thereon, each of the anti-slip members (20) engaged with the engagement bore (124) of the corresponding pedal part (12) through the engaging part (23) of the corresponding combination surface (22).

2. The bicycle pedal of claim 1, wherein each pedal part (12) has a concave accommodating recess (123), with the engagement bore (124) passing through the accommodating recess (123); the two anti-slip members (20) are disposed in the accommodating recesses (123) of the two pedal parts (12), respectively.

3. The bicycle pedal of claim 2, wherein the anti-slip surfaces (21) of the two anti-slip members (20) protrude from the corresponding accommodating recesses (123) of the two pedal parts (12).

4. The bicycle pedal of claim 1, wherein the anti-slip surface (21) of each of the anti-slip members (20) has an anti-slip pattern (211); the anti-slip pattern (211) is formed by laser etching.

5. The bicycle pedal of claim 4, wherein the engaging part (23) has an extension section (231) and an engaging section (232); the extension section (231) perpendicularly extends outward from the combination surface (22); the engaging section (232) is bent with respect to the extension section (231); the engaging section (232) is engaged with the engagement bore (124).

6. The bicycle pedal of claim 4, wherein two support ribs (13) are integrally connected between the two pedal parts (12), with the shaft bore (11) arranged between the two support ribs (13).

7. The bicycle pedal of claim 6, wherein the two anti-slip members (20) are formed in a shape identical to a shape of the two pedal parts (12).

8. The bicycle pedal of claim 7, wherein a plurality of engagement bores (124) are included; a plurality of engaging parts (23) are included; a number of the engagement bores (124) matching a number of the engaging parts (23).

9. The bicycle pedal of claim 8, wherein the engagement bores (124) are disposed at intervals along a periphery of the pedal body (10) and the shaft bore (11).

10. The bicycle pedal of claim 8, wherein each of the pedal parts (12) has a first step area (121) and a second step area (122); an area of the first step area (121) is larger than an area of the second step area (122); the number of the engagement bores (124) of the first step area (121) is greater than the number of the engagement bores (124) of the second step area (122).
